# EUROPEAN PATENT APPLICATION

(11) **EP 4 495 932 A1**
(43) Date of publication of application: **22.01.2025**
(21) Application number: 23461628.2
(22) Date of filing: 17.07.2023
(51) Int. Cl.: G10L 15/06

(54) **AN AUTOMATIC SPEECH RECOGNITION SYSTEM AND A METHOD FOR TRAINING A SPEECH RECOGNITION MODEL**

(71) Applicant: Techmo Sp. z o.o., 30-384 Krakow (PL)
(72) Inventor: PALKA, Szymon, 30-363 Krakow (PL); JADCZYK, Tomasz, 42-605 Tarnowskie Gory (PL); PEDZIMAZ, Tomasz, 30-128 Krakow (PL); STANKIEWICZ, Piotr, 30-392 Krakow (PL)
(74) Representative: Kancelaria Eupatent.pl Sp. z.o.o

(57) **Abstract**

An automatic speech recognition system comprising a speech recognition model (110) having an input for receiving an audio input signal and configured to convert the audio input signal to a recognized text, characterized in that the system further comprises a training module (120) comprising: a training interface (121) configured to receive from the user training data, wherein the training data comprises new vocabulary to be stored in a vocabulary register (122) and at least one of: vocabulary phonetic notation to be stored in a phonetics register (123), vocabulary use examples to be stored in an examples register (124) and vocabulary speech recordings to be stored in a recordings register (125); and a speech recognition model interface (126) configured to perform a training procedure to train the speech recognition model (110) based on the training data stored in the registers (122-125).

## Description

### TECHNICAL FIELD

The present invention relates in general to automatic speech recognition systems, in particular to expansion of the speech recognition model to recognize less popular words or phrases.

### BACKGROUND

Automatic speech recognition systems enable computers to identify, process, and convert spoken language into text. These systems typically employ a combination of machine learning algorithms, natural language processing (NLP), and pattern recognition techniques to accurately recognize and interpret human speech. Speech recognition systems can be used in various applications, such as personal assistants, transcription services, voice-controlled devices, or automated customer services.

Typical processes performed by speech recognition systems include voice signal acquisition, signal pre-processing, feature extraction, acoustic modeling, language modeling, transcoding, post-processing and providing output in a form of converted text.

Speech recognition systems can encounter problems when recognizing less popular or infrequently used words. This problem is particularly important when developing automated customer service systems for businesses operating in specialized domains, such as medical, healthcare, legal, financial services, insurance services, or dedicated technical support.

In a typical approach, a general speech recognition system could be trained to become adapted to recognize business-specific words or phrases. However, the training procedures for typical systems are quite complicated and must be performed by specialists, which are typically employees of the speech recognition system provider. Such training may be provided when installing the system at the particular business to adapt the system to the needs of that business. However, the procedure for training on business-specific words may involve the need for the trainer to be acquainted with confidential information of the business entity.

### SUMMARY

Taking into account the problems associated with training of the prior art automatic speech recognition systems, there is a need to provide an automatic speech recognition system with a training module for training the system on specific words or phrases, such that the training can be performed by non-expert users, such as to allow the user of the system to adapt it to the business-specific needs without the need to use services of system developer's specialized personnel.

The object of the invention is an automatic speech recognition system comprising a speech recognition model having an input for receiving an audio input signal and configured to convert the audio input signal to a recognized text, and a training module comprising: a training interface configured to receive from the user training data, wherein the training data comprises new vocabulary to be stored in a vocabulary register and at least one of: vocabulary phonetic notation to be stored in a phonetics register, vocabulary use examples to be stored in an examples register and vocabulary speech recordings to be stored in a recordings register; and a speech recognition model interface configured to perform a training procedure to train the speech recognition model based on the training data stored in the registers.

The training module may further comprise a suggestions generator configured to generate initial training data corresponding to the new vocabulary received from the user and stored in the vocabulary register, the initial training data comprising corresponding data to be stored in at least one of the other registers.

The training module may further comprise an evaluation interface configured to receive additional recordings to be stored in an additional recordings register and configured to provide the additional recordings for recognition to the input of the speech recognition model and to receive the recognized text.

The invention also relates to a method for training a speech recognition system as described herein, the method comprising: receiving from the user new vocabulary; receiving from the user at least one of: vocabulary phonetic notation, vocabulary use examples and vocabulary speech recordings; and training the speech recognition model with the data received from the user.

The method may further comprise generating, by means of the suggestions generator, initial training data corresponding to the new vocabulary received from the user and stored in the vocabulary register, the initial training data comprising corresponding data to be stored in at least one of the other registers.

The method may further comprise evaluating the speech recognition model using additional recordings stored in an additional recordings register.

### BRIEF DESCRIPTION OF DRAWINGS

The invention is shown by means of example embodiments on a drawing, wherein:
Fig. 1 shows an example structure of an automatic speech recognition system in accordance with the present invention;
Fig. 2 shows an embodiment of a training procedure;
Fig. 3A shows an example of a user interface for entering words;
Fig. 3B shows an example of a user interface for entering word alternatives;
Fig. 3C shows an example of a user interface for entering phonetic alternatives;
Fig. 3D shows an example of a user interface for entering examples of use;
Fig. 3E shows an example of a user interface for entering speech recordings;
Fig. 3F shows an example of a user interface for presenting test results;
Fig. 4 shows an example of a computer system for implementing the training module.

### DETAILED DESCRIPTION

The following detailed description, presented in conjunction with the accompanying drawings, provides an explanation of the invention, its various embodiments, features, and implementations. This description is intended to enable those skilled in the art to make and use the invention, while also suggesting numerous modifications that fall within the scope of the invention. While specific examples and configurations are described to better illustrate the invention, it should be understood that these are provided for illustrative purposes only and are not intended to limit the scope of the invention. It is to be appreciated that the precise details of the invention may be varied without departing from its essential features presented in the claims.

The system according to the present invention facilitates the expansion of speech recognition models. It can be used to reduce the percentage of incorrect recognitions for a selected set of words or to extend the model to support new, previously unknown words or expressions. The system allows the user to define vocabulary whose recognition is unsatisfactory in the currently used version of the model. For each word, its variants can be defined and examples of use in a sentence can be provided. These activities are automated and the user is free to modify the automatically generated data. The user can also provide a set of recordings containing examples of the use of the vocabulary for which the model is being trained. Once the vocabulary information has been entered, the model's post-training and its tests are performed automatically. The user may then verify the achieved recognition quality and start using the improved model or perform further iterations of its expansion as required.

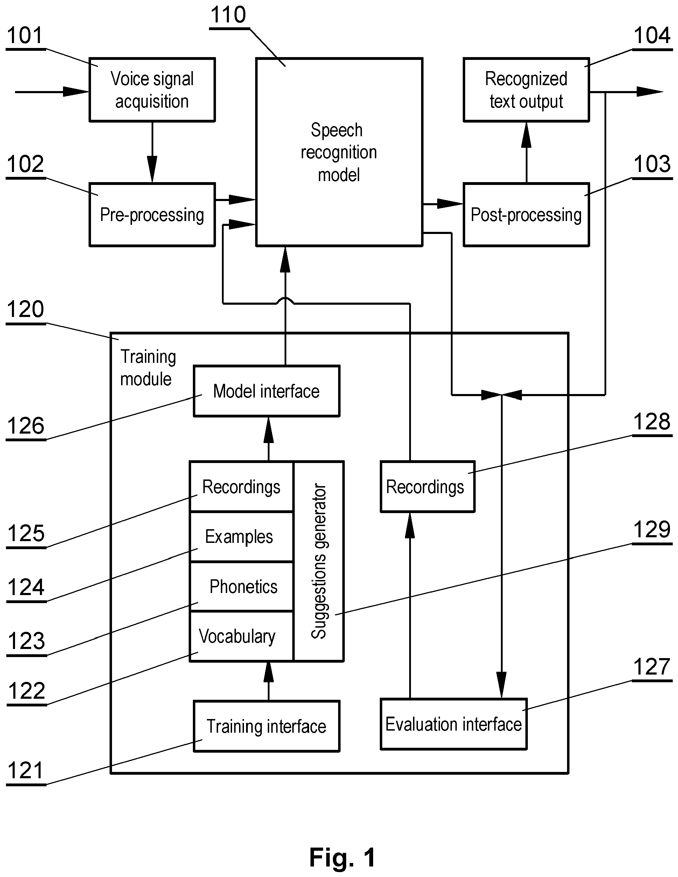

Fig. 1 shows an example structure of an automatic speech recognition system in accordance with the present invention. The system comprises a voice signal acquisition module 101 for capturing an audio input signal. This module can be connected directly to a microphone or to another source of signal, such as an automated telephone customer service system or source of pre-recorded signals. The voice signal acquisition module 101 passes the audio input signal to a pre-processing module 102 configured to pre-process the audio input signal, for example by removing noise, performing filtering, normalization etc., in order to make it more usable for speech recognition, using methods known in the art. The pre-processed audio input signal is input to a speech recognition model 110 which converts speech represented by the pre-processed audio input signal to recognized text, using methods known in the art, for example to extract and recognize audio signals corresponding to speech and determine corresponding text words. The recognized text output from the speech recognition model 110 can be further post-processed in a post-processing module 103, which can be configured for correcting errors such as checking for correctness of use of homophone words, punctuation, text formatting etc. Finally, the output module 104 is configured to output the post-processed recognized text in a desired format, such as a text for display on a screen of a device for use of the system, a computer file, or a text to be input to further modules for automated customer service, such as automated chatbots which generate text to be then converted to speech and output to perform automated conversation with a user of the system.

The speech recognition model 110 is a model that is trained to output recognized text corresponding to the speech represented by the received input signal. The details of operation of the speech recognition model 110 are not essential for the purposes of the present invention, which can be used with various models. In one embodiment, transformer-based architectures can be used, which leverage self-attention mechanisms to capture long-range dependencies in the audio input and have been successful in various natural language processing tasks, including speech recognition. In another embodiment, convolutional neural networks (CNNs) can be used, which are commonly used in automatic speech recognition (ASR) systems to extract local acoustic features from audio spectrograms and are known for their ability to capture local patterns and are often combined with recurrent neural networks (RNNs) for sequence modeling. In yet another embodiment, connectionist temporal classification (CTC) frameworks can be used, which are used in ASR that allows for end-to-end training without requiring explicit alignment between the input audio and output text, and are known to have been used in combination with various neural network architectures to improve ASR performance.

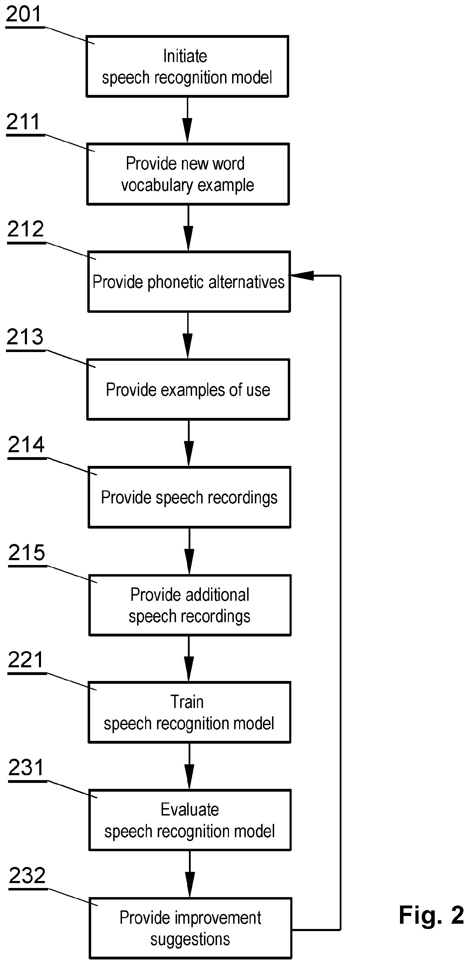

The training module 120 is configured to train the speech recognition model 110 by inexperienced, non-specialist users, in accordance with the procedure shown in Fig. 2. The training module 120 comprises a training interface 121 configured to allow the user to input training data to the training module, such as a new vocabulary to be stored in a vocabulary register 122, and at last one of corresponding vocabulary phonetic notation to be stored in a phonetics register 123, vocabulary use examples to be stored in an examples register 124 and vocabulary speech recordings to be stored in a recordings register 125 and therefore configured to receive these data from the user. A speech recognition model interface 126 is configured to perform a training procedure to train the speech recognition model 110 based on the training data received from the user and stored in the registers 122-125. A suggestions generator 129 may be used, which is configured to generate initial training data corresponding to the new vocabulary received from the user and stored in the vocabulary register 122, the initial training data comprising corresponding data to be stored in at least one of the other registers 123-125, to be verified by the user. Furthermore, an evaluation interface 127 can be used, which is configured to receive additional recordings to be stored in an additional recordings register 128 to test whether the speech recognition model 110 has been sufficiently well trained, by inputting the additional recordings for recognition and receiving the recognized text, either directly from the speech recognition model 110 or from the recognized text output 104.

Fig. 2 shows a training procedure performed by means of the training module 120. First, in step 201 the speech recognition model 110 is initiated, i.e. the training module 120 checks what is the model type and adapts its model interface 126 to train that particular model of the speech recognition module 120. The checking of the model type can be performed using known means, such as question-and-response or identifying a property of the model, and the training module may contain a number of pre-stored training schemes adapted for particular model types or may be configured to collect training schemes from external sources if such schemes are not pre-stored. Next, in steps 211-214 the new vocabulary is received from the user via the training interface 121. Preferably, all steps 211-215 are performed, but in some simplified embodiments it is enough to complete at least one or more, but not necessarily all of the steps 212-215.

In steps 211-215 the user may enter manually one or more entries associated with a word. These entries may be generated by the user manually or may be automatically generated by the suggestions generator 129, for example read from an external source, such as a text database (such as database of texts specific for the business entity that will use the system), a set of templates, an application program interface (API) to a statistical language model, an API to an artificial intelligence (AI) language model, or an API to a generative AI model. The user may then edit the automatically generated entries, such as by deleting entries that are not considered as appropriate by the user, amending the automatically generated entries or adding new user-defined entries. The system may suggest or require a predetermined minimum number of entries in each category provided in steps 212-215.

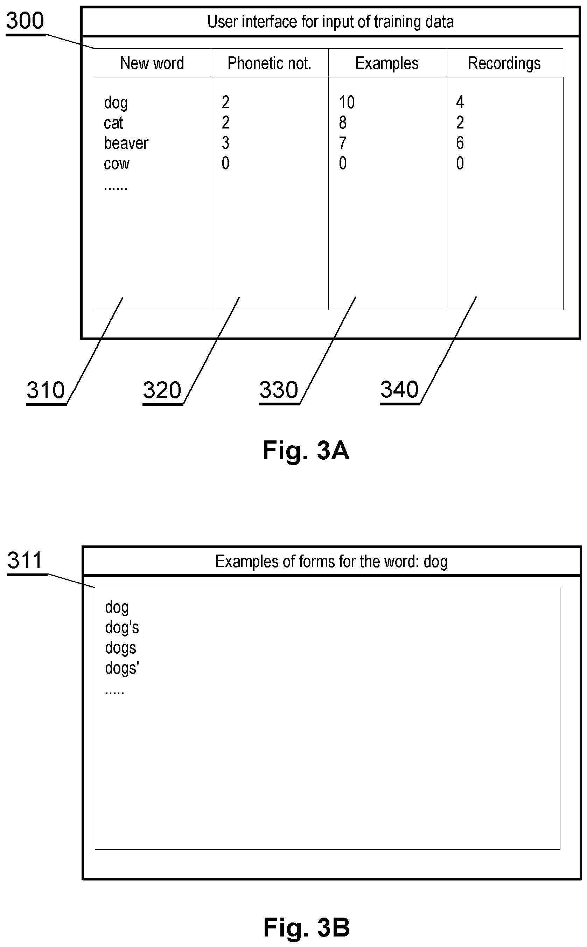

In step 211, a new word to be recognized is read, optionally with its various inflection (such as conjugation or declination) forms, which may be generated automatically and/or added manually by the user. An example of a graphical user interface (GUI) including entry of a word together with its various forms is shown in Fig. 3A, wherein a table 300 is shown with a first column 310 containing a list of words, a second column 320 containing number of phonetic notations for each word, a third column 330 containing a number of examples for each word, a fourth column 340 containing a number of recordings for each word. A user may click the first column 310 at the end of the list of words to add a new word or click a corresponding position in the other columns to add a new entry of a type corresponding to that column. In the example of Fig. 3A the words are names of animals for the sake of clarity of the description, but in real use scenarios the words can be specialized words that are typically not known to standard speech recognition systems, such as vocabulary related to businesses operating in specialized domains, such as medical, healthcare, legal, financial services, insurance services, or dedicated technical support.

For each word its various alternatives can be entered on an additional list 311 (by clicking on the word), as shown in a GUI in Fig. 3B.

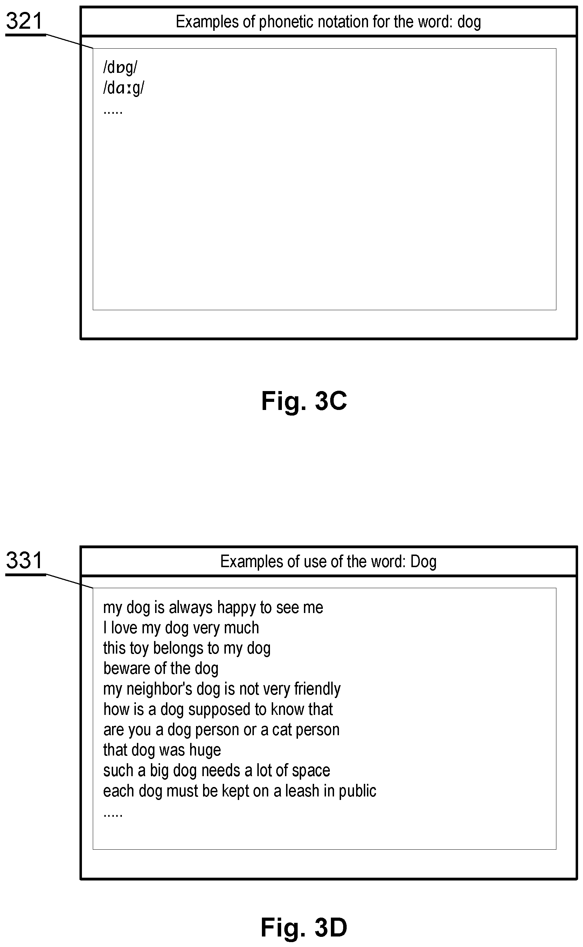

Next, in step 212 phonetic alternatives of the word are entered. The phonetic alternatives are defined by means of a phonetic alphabet, such as International Phonetic Alphabet (IPA) or in orthographic notation. The phonetic alternatives may be generated automatically by the suggestions generator 129 and/or added manually by the user. An example GUI for entering the phonetic alternatives is shown in Fig. 3C, wherein the user has entered 2 examples to a list 321.

Next, in step 213 examples of use of the word are read. These examples shall present typical contexts in which the word can be used. They may be generated automatically by the suggestions generator 129 and/or added manually by the user. An example GUI for entering the examples of use is shown in Fig. 3D, wherein the user has entered 10 examples to a list 331.

In step 214 speech recordings are input to the system. The user may record example utterances of the word on the go, as the word is entered to the system, using a microphone, or may enter pre-recorded samples (such as samples of utterance of the word by different persons, of different sex, age, nationality etc.). Alternatively, the recordings may be provided by the suggestions generator 129. For example, the suggestions generator 129 may comprise an AI model configured to generate speech samples related to specific word in different pronunciation varieties (such as different dialects, by people of different ages, with different speech speeds, with different emotions). Alternatively or in addition, the suggestions generator 129 may be configured to search through existing libraries of recordings to find occurrences of that word and provide these recording fragments.

In step 215 additional speech recordings are input to the system, along with the corresponding text that they represent, via the training interface. These additional recordings may be of that single word or may be longer recordings, such as whole sentences with the use of that word. The additional recordings will be used later on to verify whether the speech recognition model 110 was well trained, i.e. whether the recognized text corresponds with the text specified as corresponding to the additional speech recording. Alternatively, the additional speech recordings may be provided by the suggestions generator 129, for example such as described above with respect to step 214.

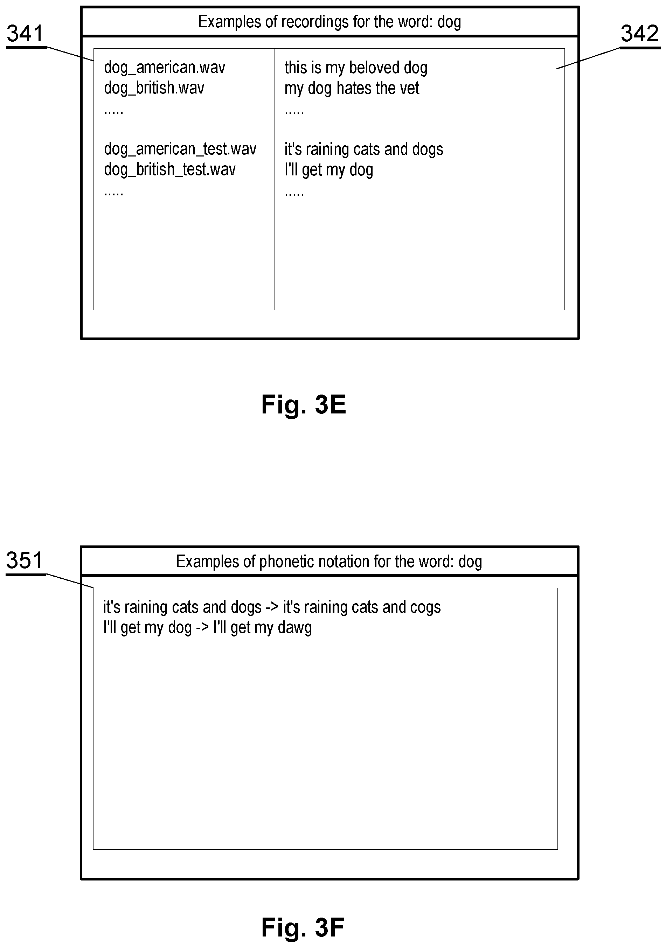

An example GUI for entering the speech recordings is shown in Fig. 3E, wherein the user has entered two speech recordings to a first part of the list 341 and two additional speech recordings to a second part of the list 341, and their corresponding text representation in the list 342.

In step 221 the speech recognition model 110 is trained with the data entered in steps 211-214. Before the training, preferably upon the data entry in steps 211-214, the system may verify whether enough amount of data was entered to provide satisfactory training. For example, the system may require a predetermined number of examples of use per each word or predetermined number of various recording examples for each word. The system may also verify whether the data in steps 212-214 were provided for each form of the word defined in step 211. The training is performed by known methods, applicable to a particular speech recognition model.

Next, in step 231 the speech recognition model 110 is evaluated to establish whether it was sufficiently well trained, by inputting the additional recordings to the speech recognition model 110 and checking whether the output recognized text corresponds to the predefined text that is represented by these recordings.

In step 232 the system presents results of the evaluation, for example by indicating which words were recognized in a satisfactory manner, and which were not recognized or were not recognized with enough confidence. Fig. 3F shows an example of a user interface screen presenting the test results in a table 351.

The system may then require or at least suggest the user to resume steps 212-214 to provide more training data for specific words, such as to improve the training procedure and train the speech recognition model 110 for more accurate recognition of specific words. According to the presented example of results in Fig. 3F, the word "dogs" in the first test recording was incorrectly recognized as "cogs", which may be caused by insufficient number of examples for word "dogs" in the training data. According to the presented example, the word "dog" in the second test recording was incorrectly recognized as "dawg", which may be caused by unusual pronunciation of the word, which suggests that more example recordings shall be added to further train the model. The system may provide the suggestions on the cause of erroneous result to the user based on pre-stored criteria associating a type of error with the most probable cause or a list of probable causes.

Once the training is satisfactory (i.e. fulfilling predetermined criteria such as a number of errors in recognized text lower than a predetermined threshold or accepted manually by the user), the speech recognition model 110 is considered to be ready for use with the capability to recognize the newly defined words.

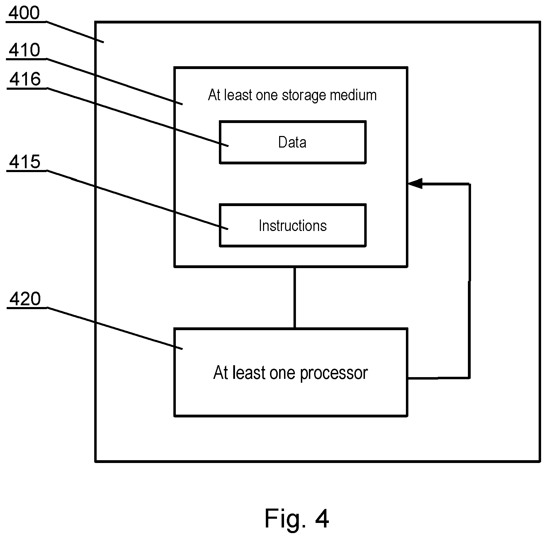

The functionality of the training module 120 can be implemented in a computer system 400, such as shown in Fig. 4. The system 400 may include at least one nontransitory processor-readable storage medium 410 that stores at least one of processor-executable instructions 415 or data 416; and at least one processor 420 communicably coupled to the at least one nontransitory processor-readable storage medium 410. The at least one processor 420 may be configured to (by executing the instructions 415) perform the procedure of Fig. 2. The training module 120 can be implemented in the same computer system as the speech recognition module 110 or in another computer system.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. An automatic speech recognition system comprising a speech recognition model (110) having an input for receiving an audio input signal and configured to convert the audio input signal to a recognized text, **characterized in that** the system further comprises a training module (120) comprising:
- a training interface (121) configured to receive from the user training data, wherein the training data comprises new vocabulary to be stored in a vocabulary register (122) and at least one of: vocabulary phonetic notation to be stored in a phonetics register (123), vocabulary use examples to be stored in an examples register (124) and vocabulary speech recordings to be stored in a recordings register (125); and
- a speech recognition model interface (126) configured to perform a training procedure to train the speech recognition model (110) based on the training data stored in the registers (122-125).

2. The system according to claim 1, wherein the training module (120) further comprises a suggestions generator (129) configured to generate initial training data corresponding to the new vocabulary received from the user and stored in the vocabulary register (122), the initial training data comprising corresponding data to be stored in at least one of the other registers (123-125).

3. The system according to any of previous claims, wherein the training module (120) further comprises an evaluation interface (127) configured to receive additional recordings to be stored in an additional recordings register (128) and configured to provide the additional recordings for recognition to the input of the speech recognition model (110) and to receive the recognized text.

4. A method for training a speech recognition system according to any of previous claims, the method comprising:
- receiving (211) from the user new vocabulary;
- receiving (212-214) from the user at least one of: vocabulary phonetic notation, vocabulary use examples and vocabulary speech recordings; and
- training (221) the speech recognition model (110) with the data received from the user.

5. The method according to claim 4, further comprising generating, by means of the suggestions generator (129), initial training data corresponding to the new vocabulary received from the user and stored in the vocabulary register (122), the initial training data comprising corresponding data to be stored in at least one of the other registers (123-125).

6. The method according to any of claims 4-5, further comprising evaluating (231) the speech recognition model (110) using additional recordings stored in an additional recordings register (128).
